# EUROPEAN PATENT SPECIFICATION

(11) **EP 0 593 223 B1**
(45) Date of publication and mention of the grant of the patent: **06.03.1996**
(21) Application number: 93308022.8
(22) Date of filing: 08.10.1993
(51) Int. Cl.: B23B 29/034

(54) **Improved micrometric device for finishing bores**
Verbesserte mikrometrische Vorrichtung für Feinbearbeitung von Bohrungen
Dispositif micrométrique amélioré pour la finition de trous

(30) Priority: 08.10.1992 BR 9204015
(43) Date of publication of application: 20.04.1994
(60) Divisional application: 95110157.5
(73) Proprietor: INDUSTRIAS ROMI S.A., BR-13450-00 Santa Barbara d'Oeste - SP (BR)
(72) Inventor: Romi, Giordano, 13450-000 Santa Barbara d'Oeste - SP (BR)
(74) Representative: Needle, Jacqueline

(56) References cited:
- CH-A- 330 219
- DE-A- 1 477 252
- FR-A- 2 546 091
- US-A- 2 009 421
- US-A- 2 498 870
- US-A- 3 592 553

## Description

The present invention relates to micrometric device for finishing bores. For example, the invention relates to high precision micrometric devices for finishing through and/or blind bores.

GB-A-2250459 describes a micrometric device for finishing bores having a rotatable micrometric screw extending substantially longitudinally in a substantially cylindrical, hollow body, a tool supporting member, with a tool holder, movable with respect to said body, and means for causing linear movement of said tool supporting member upon rotation of said micrometric screw. This micrometric device is not particularly compact.

DE-A-1477252 describes a micrometric device for finishing bores comprising a substantially cylindrical, hollow body, a rotatable micrometric screw extending substantially longitudinally in said body, a tool supporting member supported by and movable with respect to said body, a tool holder carried by said tool supporting member, and moving means for causing linear movement of said tool supporting member upon rotation of said micrometric screw, said moving means comprising a substantially cylindrical elongate rod arranged to be moved linearly upon rotation of said micrometric screw, and having an oblique portion extending at an angle (β) to the longitudinal axis of said rod, said oblique portion being slidably engaged in said tool supporting member such that rotation of said micrometric screw causes displacement of said tool supporting member in a direction substantially perpendicular to the rotational axis of said micrometric screw.

The present invention seeks to provide a micrometric device of the type defined having a simple construction and increased rigidity.

According to the present invention a micrometric device is characterised in that upper and lower bushings provided with internal and external threads are arranged substantially coaxially and within the cylindrical rod and in threaded engagement therewith, and in that an extension of said micrometric screw extends within, and is threadingly engaged with, said upper and lower bushings.

As a consequence of its construction, the rigidity of a micrometric device according to an embodiment of the invention is increased, particularly when it rotates at high speeds of operation.

Embodiments of the present invention also have a more simplified construction as compared to existing devices. However, this simplification does not cause any kind of impairment to the precision levels attainable with the device.

Preferably, backlash suppression means are provided to suppress backlash between first and second relatively movable, linearly movable parts of or associated with said moving means, said backlash suppression means comprising a bore extending in said first part and opening in a surface thereof, a wedge received in said bore, and pressure means arranged to urge said wedge outwardly of the opening of said bore to abut a side wall of said second part and thereby suppress any mechanical backlash.

The cylindrical rod, lower bushing and upper bushing may together form a single assembly mounted coaxially around an upper portion, or extension, of said micrometric screw.

Preferably, a graduated drum is mounted coaxially relative to said micrometric screw and is coupled thereto such that rotation of said drum rotates said screw, rotation of said drum, and hence of said screw causing linear displacement, in a direction longitudinally of said screw, of an assembly comprising said cylindrical rod and said upper and lower bushings, the resolution of said micrometric screw being substantially equal to the smallest possible displacement of said assembly and being determined by the relationship of the thread pitch of the micrometric screw and the number of divisions of the graduated drum.

The relationship between the thread pitch of the micrometric screw and the number of the divisions of the graduated drum determining the resolution is generally the quotient of the division of the thread pitch by the number of divisions.

The tool supporting member is arranged to be displaced by said cylindrical rod assembly and may be a movable crossbeam. Preferably, the ratio of the displacement of said movable crossbeam to the displacement of said cylindrical rod and said oblique extension is determined by the angle of inclination between the axis of said cylindrical rod and a geometric axis of said oblique extension together with the resolution of said micrometric screw.

In an embodiment, substantially V-shaped guideways are arranged on said tool supporting member or movable crossbeam and on an upper portion of said micrometric device, and a first series of balls are lodged between said guideways. The angle of inclination of said oblique extension may be within a plane that extends substantially parallel to said guideways, and said guideways may extend in a substantially perpendicular direction to the longitudinal axis of said micrometric screw.

In an embodiment, said tool supporting member is a movable crossbeam supported on said body to move substantially perpendicularly to the longitudinal axis of said micrometric screw, and wherein movement of said crossbeam relative to said body is guided by at least two rows of spaced balls arranged to roll along respective facing guideways of said body and crossbeam, each said guideway extending in a respective one of said crossbeam and body substantially perpendicularly to the longitudinal axis of said micrometric screw, and each said guideway being substantially V-shaped.

Preferably, said guideways comprise cuts or grooves provided in upper external walls of said movable crossbeam and in upper internal walls of said upper portion of the micrometric device, said movable crossbeam being guided by said guideways.

Plane guideways may be arranged in lower external lateral edges of said movable crossbeam and in lower internal lateral edges of said upper portion of said micrometric device, with a second series of balls arranged between said plane guideways.

In a preferred embodiment, substantially plane guideways are also provided in said crossbeam and said body to face one another, and a further series of balls are arranged between facing plane guideways to facilitate displacement of said crossbeam.

Preferably, each pair of two pairs of facing substantially V-shaped guideways is arranged to extend substantially parallel to, and at a distance from, a respective pair of two pairs of facing plane guideways such that the series of balls in the guideways are contained in a substantially trapezoidal perimeter whose vertices are the centre lines of said balls.

In an embodiment, said body is cylindrical and is provided with side openings such that said graduated drum is manually accessible and manually rotatable.

Said graduated drum may be structured and arranged to receive movement from external actuating means.

Preferably, said movable crossbeam is provided with indented portions on an upper surface thereof such that the tool holder is arranged on said movable crossbeam by aligning said indented portions on said movable crossbeam with indented portions provided on a lower portion of the tool holder, the tool holder being firmly clamped to said movable crossbeam by means of screws.

In an embodiment, the micrometric device further comprises backlash suppression means associated with said moving means, wherein said tool supporting member is a crossbeam and said backlash suppression means comprises a bore extending in said crossbeam and opening in a surface thereof, a wedge received in said bore, and pressure means arranged to urge said wedge outwardly of the opening of said bore to abut a side wall of said oblique portion and thereby suppress any mechanical backlash.

The pressure means of said backlash suppression means may comprise a screw arranged to be held in a predetermined position in said bore, and spring means interposed between said screw and said wedge and arranged to urge said wedge outwardly of said bore, and wherein, preferably, said wedge has a trapezoidal section.

In an embodiment, said micrometric device further comprises a first cooling duct extending in said body substantially longitudinally thereof, one end of said first cooling duct opening into a cooling chamber, and a second cooling duct extending in said tool supporting member, wherein at least part of said cooling chamber has a circular periphery and is arranged to remain in communication with said second cooling duct irrespective of the position of said tool supporting member relative to said body.

Preferably, said cooling chamber includes a circular recess provided in a surface of said body facing said tool supporting member, and wherein the diameter of said circular recess is equal to or greater than the maximum linear displacement of said tool supporting member relative to said body.

Embodiments of the present invention will hereinafter be described, by way of example, with reference to the accompanying drawings, in which:
Figure 1 is a plan view of a micrometric device for finishing bores, with the tool removed, of the invention;
Figure 2 is a longitudinal section of the micrometric device taken along line A-A of Figure 1;
Figure 2a is an enlarged schematic detail of the micrometric device shown in Figure 2, illustrating part of mechanical elements for converting rotation into linear movement;
Figure 3 is a cross section of the device taken on line B-B of Figure 1;
Figure 4 is a section of the micrometric device taken along line C-C of Figure 2;
Figure 5 shows an enlarged schematic and partially cut longitudinal section of the free end of a graduated drum of the device;
Figure 5a is a front view of a circular face of the free end of the graduated drum, showing a plurality of teeth uniformly displayed around the circular face;
Figure 6 is a partial longitudinal section of an upper portion of the micrometric device showing the support mounting of a cutting tool;
Figure 7 is a longitudinal section of the front portion of the micrometric device taken along line F-F of Figure 6;
Figure 8 is an enlarged longitudinal section of the front portion of the micrometric device with a different tool holder, taken along the line F-F of Figure 6; and
Figure 9 is a front view of the micrometric device taken in the direction of arrow E of Figure 6.

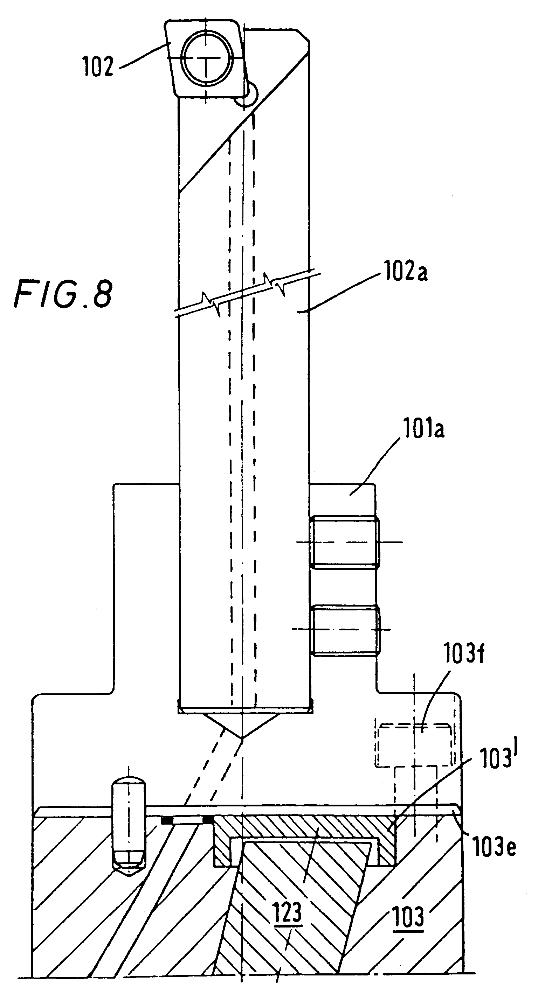

The micrometric device lOO illustrated may be used for finishing both through and blind bores. When a cutting tool lO2 is clamped directly onto a tool holder lOl, the cutting tool lO2 may finish large bores or bores as small as the smallest diameter of a rod extension lO2a that holds the cutting tool lO2. The clamping of the rod extension lO2a on a tool holder lOla is clearly shown in Figure 8.

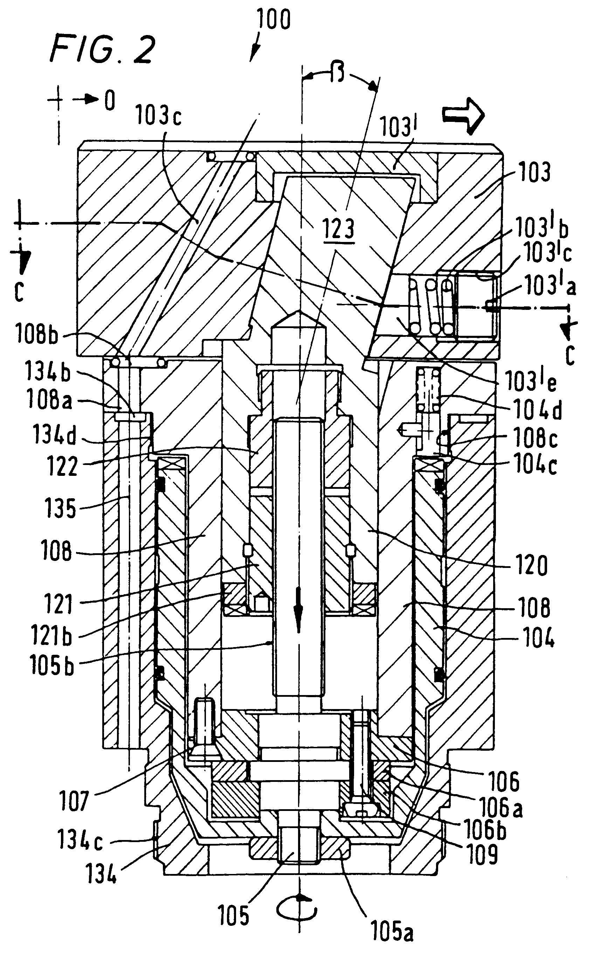

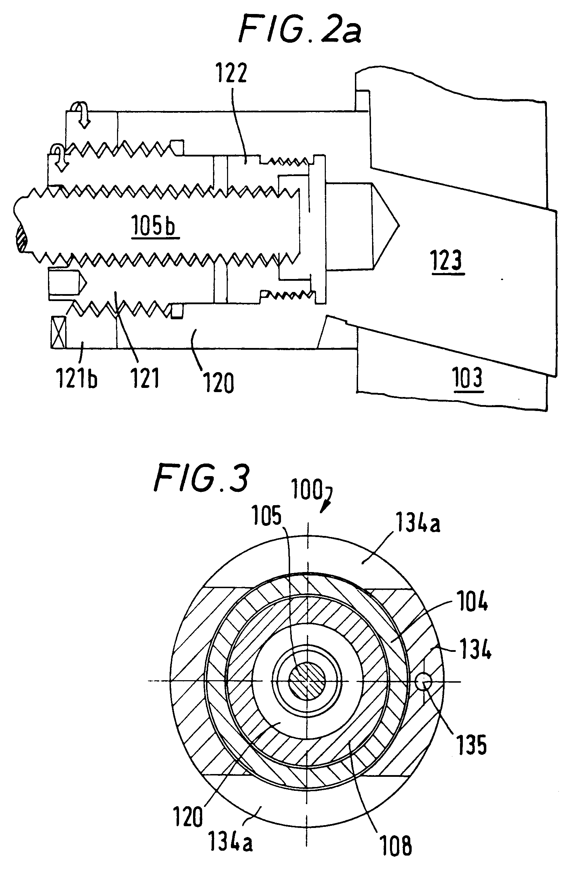

From the outset, the concept of active and passive thread flanks of screws, internal and external threaded bushings, and other mechanical threaded elements should be taken into consideration and defined. The term "active flank" of a thread denotes a flank of a thread that interacts with one of the flanks of another thread such that the two flanks are kept in contact with each other. The term "passive flank" of a thread denotes the flank of a thread that is opposite and adjacent to a corresponding active flank. Between two such passive flanks, there is clearance. Figure 2a shows the condition and construction of active and passive flanks as explained above.

The micrometric device lOO is provided with a movement transmission mechanism which comprises a graduated drum lO4 coaxially and jointly mounted around a micrometric screw lO5. In this manner, rotation of the drum lO4 is arranged to cause rotation of the micrometric screw lO5.

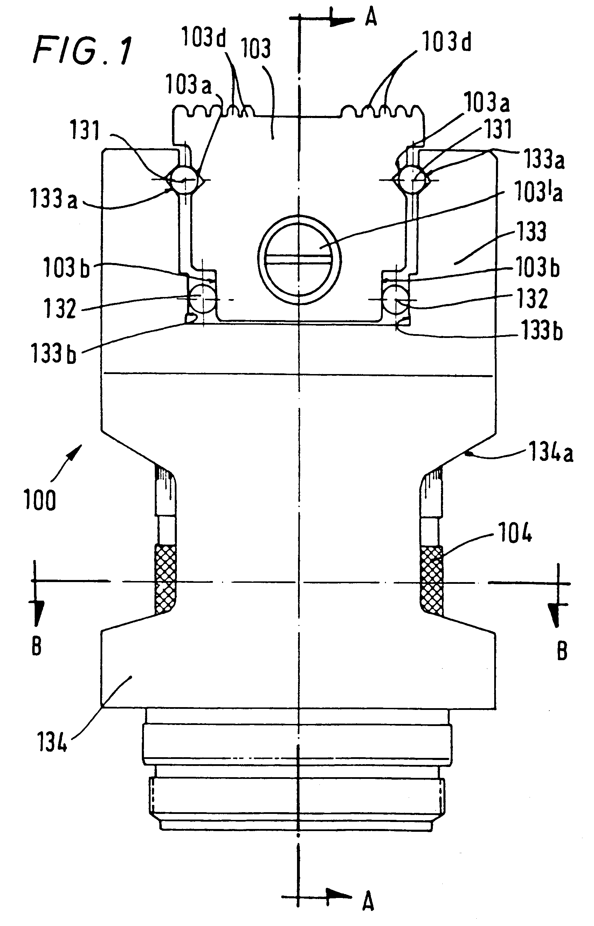

Micrometric screw lO5 is axially maintained and radially supported in relation to the body of the micrometric device lOO by way of a support system comprising a plurality of rings lO6, lO6a and lO6b, which are held together by fastening screws lO9. The support system itself is held, by fastening screws lO7, to a substantially cylindrical and hollow internal body lO8 as shown in Figure 2. This internal body lO8 is part of the body of the micrometric device. The body member lO8 is held together and coaxially held to an external complementary cylindrical body l34 by the interengagement of an external thread lO8c of the body lO8 with an internal thread l34d of the external body l34. The complementary cylinder l34, graduated drum lO4 and cylinder lO8 form a single assembly which is mounted coaxially around the micrometric screw lO5, as shown in Figures 1, 2 and 3.

At the extreme bottom end of the micrometric screw lO5, a nut lO5a is provided for holding the graduated drum lO4 close to the micrometric screw lO5. At its upper end, the micrometric screw lO5 has an upper extension which is within cylindrical body lO8. The upper extension has a thread lO5b which coaxially trespasses through a lower bushing l2l and an upper bushing l22. Both of these bushings l2l, l22 are provided with internal and external threads which in turn trespass coaxially through a cylindrical rod l20 which is slidably lodged inside a coaxial hole of the internal cylindrical body lO8. The cylindrical rod l20 is also provided with a threaded portion which engages the external threads of both the lower bushing l2l and the upper bushing l22. A threaded locking ring l2lb is provided to prevent the lower bushing l2l from being moved after it has been adjusted for zero backlash.

The cylindrical rod l20, together with the lower bushing l2l and the upper bushing l22, comprise a single assembly coaxially mounted around the upper portion, or extension, of the micrometric screw lO5 and arranged inside the internal cylindrical body lO8 as shown in Figure 2. The cylindrical rod l20 incorporates, at its uppermost end, an oblique portion or extension l23 whose geometric axis is off-set at an angle β relative to a longitudinal or geometric axis of the micrometric screw lO5. In this manner, rotation of the graduated drum lO4 is transmitted to the micrometric screw lO5 and then converted into linear movement of the cylindrical rod l2O substantially in the longitudinal direction of the rod l2O. In turn, the linear movement of the cylindrical rod l20 causes the oblique extension l23 to displace a movable crossbeam lO3 arranged to extend substantially perpendicularly to the geometric axis of the micrometric screw lO5 thus making possible a radial displacement of tool holders lOl or lOla.

During the conversion of the rotating movement of the graduated drum lO4, and closely connected micrometric screw lO5, into linear movement of the cylindrical rod l20, it is important to take cognisance of the resolution of the micrometric screw lO5. This resolution is defined as being equal to the smallest possible displacement of the cylindrical rod l2O. This displacement is generally equal to the quotient of the division of the thread pitch of the micrometric screw lO5 by the number of lines (divisions) of the graduated drum lO4.

The radial displacement of the movable crossbeam lO3 is caused by longitudinal displacement of the oblique extension l23 of the cylindrical rod l20. The amount of radial displacement of the crossbeam lO3 is a function of the resolution of the micrometric screw lO5 and also of the tangent of the angle β, where tan β is the radial displacement of the movable crossbeam lO3/longitudinal displacement of the extension l23.

As can be seen in Figures 1, 2 and 6, the movable crossbeam lO3 operates as a support base for the tool holder lOl and moves on an upper portion of the micrometric device lOO. The movement of the crossbeam lO3 is guided by substantially horizontally extending, substantially V-shaped cuts or grooves lO3a and l33a provided on upper external walls of the movable crossbeam lO3 and on the upper internal portion of the upper portion l33 of the micrometric device lOO. Balls l3l are arranged in these grooves. Further balls l32 are arranged between plane guideways formed by lower external lateral edges lO3b of the movable crossbeam lO3 and plane guideways formed by lower internal lateral edges l33b of the upper portion l33 of the body of the micrometric device lOO. The balls l3l, l32 in their respective guideways enable displacement of the movable crossbeam lO3, in a direction substantially perpendicular to the geometric axis of the micrometric screw lO5, relative to the upper body l33 and ensure that the displacement is achieved substantially without backlash and without friction.

The substantially horizontally extending V-shaped guideways that receive the balls l3l, and the plane guideways that lodge the balls l32, extend substantially parallel and at a distance from each other in the direction of a perpendicular plane passing through the geometric axis of the micrometric screw 105. The axis of the micrometric screw lO5 is preferably coaxial to the axis of micrometric device lO0. This arrangement of the guideways provides for a displacement of the movable crossbeam lO3 in a substantially perpendicular direction to the geometric axis of the micrometric screw l05. As a result, the tool holder lOl or lOla is displaced in a radial direction of the micrometric device lOO.

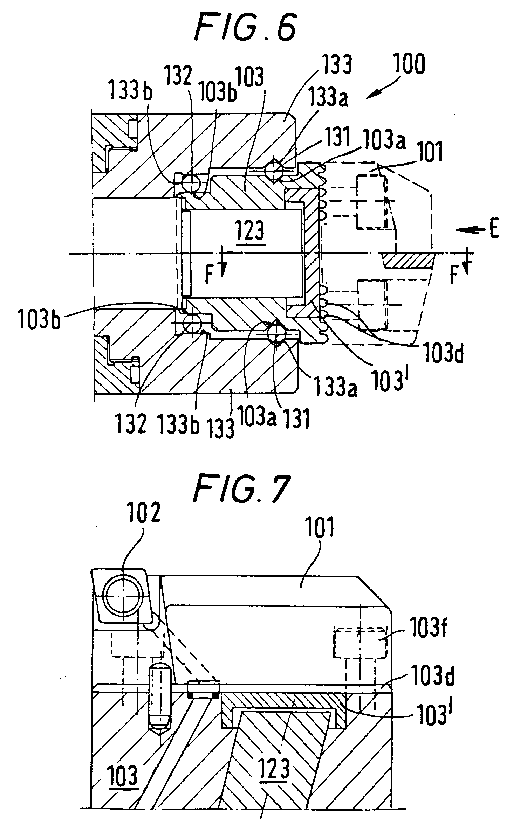

Figures 1 and 6 also illustrate that balls l3l and l32 are held in a substantially trapezoidal perimeter in which the vertices are the centres of the balls. This arrangement provides maximum stability for the movable crossbeam lO3 and ensures against any tendency of rotation relative to a plane extending substantially perpendicularly to the guideways that lodge the balls.

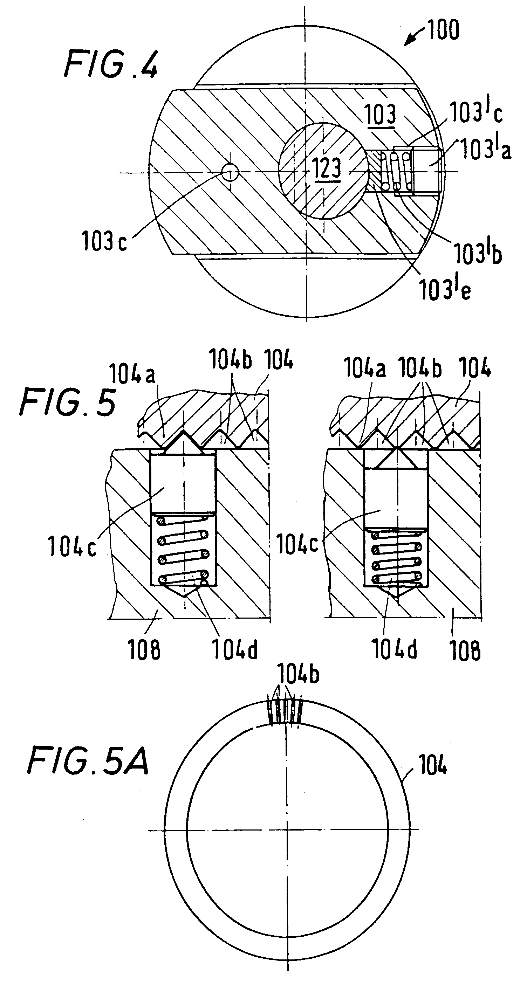

As shown in Figures 2, 5 and 5a, a free end of the graduated drum lO4 is provided with a plurality of teeth lO4a and empty spaces lO4b on which at least one pair of locating pins lO4c actuate. A free end of each of the pins lO4c is compelled to be engaged either in the empty space lO4b between any of two teeth lO4a, or over the crest of any of the teeth lO4a.

From the above description, and as illustrated in Figures 2, 5 and 5a, the action of the springs l04d on the pins lO4c establishes a condition of resilient pressure in order that pins lO4c actuate and exert an effective function as locators for the graduated drum lO4.

As can be seen in Figures l and 3, manual access to the drum lO4 is achieved through side openings l34a arranged on the external complementary cylindrical body l34. This arrangement permits manual rotation of the graduated drum lO4. Rotation of the drum lO4 may also be made through several non-manual external means (not shown). In these cases, a drum which is suitable for receiving movement from the external actuating means is used.

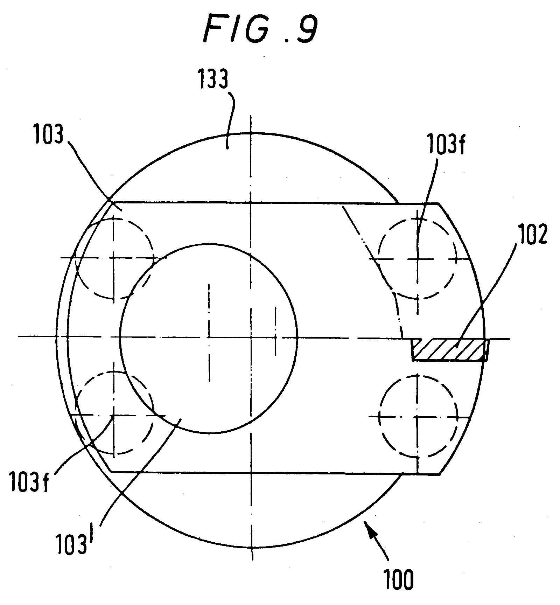

The clamping of the tool holders lOl and lOla on the movable crossbeam lO3 is by juxtaposition of an indented portion l03d existing at the upper surface of the moveable crossbeam l03, and indented portions which are present respectively at the lower portion of the tool holders l0l and l0la. This clamping is accomplished through screws l03f as shown in Figures 7, 8 and 9.

As can be seen in Figures 2 and 4, the movable crossbeam lO3 is provided with a threaded bore lO3'c arranged to extend substantially perpendicularly to the geometric axis of the micrometric device lOO. The bore lO3'c lodges a screw lO3'a which exerts pressure on a spring lO3'b which in turn compresses a wedge lO3'e. The compression of the wedge l03'e causes compression of the cylindrical surface of the extension l23. In this manner, any backlash that may exist between the cylindrical rod l20 and the cylindrical body lO8 and/or between the movable crossbeam lO3 and the extension l23 is suppressed.

A cooling duct l35 is provided inside the cylindrical wall of the complementary external body l34 of the micrometric device lOO. This cooling duct l35 is arranged to extend substantially longitudinally to the external body l34 and ends at a circular chamber l34b provided on top of the upper end of the external body l34. The circular chamber l34b communicates with a cooling duct lO3c provided on the movable crossbeam lO3 through a hole lO8a connected to a circular recess lO8b orthogonally provided on the peripheral edge of the internal cylindrical body lO8 of the micrometric device lOO as shown in Figure 2.

With this arrangement, the cooling duct l35, the chamber l34b and ducts lO8a, lO8b and 1O3c and those ducts existing on tool holders lOl and lOla (shown with dotted lines in Figures 7 and 8), provide effective cooling of the cutting tool lO2 during a machining operation assuming that proper cooling fluid is conducted through the ducts and chambers.

The diameter of the circular recess lO8b is slightly larger than the total cross displacement of the movable crossbeam lO3 so that there is always communication for cutting fluid between the lower portion of the cylindrical body lO8 and the movable crossbeam lO3 that supports the tool holders lOl and lOla and the respective cutting tool lO2.

A disc type cover lO3' is adjusted in the upper face of the crossbeam lO3 and prevents metal and liquid impurities from entering into the space occupied by the oblique extension l23 in order to avoid any possible damage to the elements of the device.

It will be appreciated that modifications and variations may be made to the device as described and illustrated within the scope of the appended claims.

## Claims

1. A micrometric device (100) for finishing bores comprising a substantially cylindrical, hollow body, a rotatable micrometric screw (105) extending substantially longitudinally in said body, a tool supporting member (103) supported by and movable with respect to said body, a tool holder (101, 101a) carried by said tool supporting member (103), and moving means (120, 123) for causing linear movement of said tool supporting member (103) upon rotation of said micrometric screw (105), said moving means (120, 123) comprising a substantially cylindrical elongate rod (120) arranged to be moved linearly upon rotation of said micrometric screw (105), and having an oblique portion (123) extending at an angle (β) to the longitudinal axis of said rod (120), said oblique portion (123) being slidably engaged in said tool supporting member (103) such that rotation of said micrometric screw (105) causes displacement of said tool supporting member (103) in a direction substantially perpendicular to the rotational axis of said micrometric screw, characterized in that upper and lower bushings (121, 122) provided with internal and external threads are arranged substantially coaxially and within the cylindrical rod (120) and in threaded engagement therewith, and in that an extension (105b) of said micrometric screw (105) extends within, and is threadingly engaged with, said upper and lower bushings (121,122).

2. A micrometric device (100) as claimed in Claim 1, wherein backlash suppression means are provided to suppress backlash between first and second relatively movable, linearly movable parts (103,123) of or associated with said moving means, said backlash suppression means comprising a bore (lO3'c) extending in said first part (lO3) and opening in a surface thereof, a wedge (lO3'e) received in said bore (lO3'c), and pressure means (lO3'a, lO3'b) arranged to urge said wedge (lO3'e) outwardly of the opening of said bore (lO3'c) to abut a side wall of said second part (l23) and thereby suppress any mechanical backlash.

3. A micrometric device as claimed in Claim 2, wherein said first part is a crossbeam (103) forming said tool supporting member, and wherein said second part is an oblique portion (123) of an elongate rod (120) of said moving means, said oblique portion (123) being slidably engaged in said crossbeam (103).

4. A micrometric device as claimed in Claim 3, wherein the pressure means (lO3'a, lO3'b) of said backlash suppression means comprises a screw (lO3'a) arranged to be held in a predetermined position in said bore (lO3'c), and spring means (lO3'b) interposed between said screw (lO3'a) and said wedge (lO3'e) and arranged to urge said wedge (lO3'e) outwardly of said bore (lO3'c), and wherein, preferably, said wedge (l03'e) has a trapezoidal section.

5. A micrometric device as claimed in any preceding claim, wherein a graduated drum (lO4) is mounted coaxially relative to said micrometric screw (lO5) and is coupled thereto such that rotation of said drum (lO4) rotates said screw (lO5), rotation of said drum (lO4), and hence of said screw (lO5), causing linear displacement, in a direction longitudinally of said screw (lO5), of an assembly comprising said cylindrical rod (l2O) and said upper and lower bushings (l2l, l22), the resolution of said micrometric screw (lO5) being substantially equal to the smallest possible displacement of said assembly and being determined by the relationship of the thread pitch of the micrometric screw (lO5) and the number of divisions of the graduated drum (lO4).

6. A micrometric device as claimed in any preceding claim, wherein said tool supporting member (lO3) is a movable crossbeam (lO3) supported on said body to move substantially perpendicularly to the longitudinal axis of said micrometric screw (lO5), and wherein movement of said crossbeam (lO3) relative to said body is guided by at least two rows of spaced balls (l3l) arranged to roll along respective facing guideways (l03a, 133a) of said body and crossbeam (lO3), each said guideway extending substantially perpendicularly to the longitudinal axis of said micrometric screw (105) in a respective one of said crossbeam (lO3) and body, and each said guideway (lO3a, l33a) being substantially V-shaped.

7. A micrometric device as claimed in Claim 6, wherein substantially plane guideways (103b, 133b) are also provided in said crossbeam (lO3) and said body to face one another, and wherein a further series of balls (l32) are arranged between facing plane guideways (lO3b, 133b) to facilitate displacement of said crossbeam (lO3).

8. A micrometric device as claimed in Claim 7, wherein each pair of two pairs of facing substantially V-shaped guideways (lO3a, l33a) is arranged to extend substantially parallel to, and at a distance from, a respective pair of two pairs of facing plane guideways (lO3b, 133b) such that the series of balls (l3l, l32) in the guideways are contained in a substantially trapezoidal perimeter whose vertices are the centre lines of said balls (l3l, l32).

9. A micrometric device as claimed in any preceding claim, further comprising a first cooling duct (l35) extending in said body substantially longitudinally thereof, one end of said first cooling duct (l35) opening into a cooling chamber (lO8a, 108b, 134b), and a second cooling duct (lO3c) extending in said tool supporting member (lO3), wherein at least part of said cooling chamber (lO8a, lO8b, l34b) has a circular periphery and is arranged to remain in communication with said second cooling duct (lO3c) irrespective of the position of said tool supporting member (lO3) relative to said body.

10. A micrometric device as claimed in Claim 9, wherein said cooling chamber (lO8a, lO8b, l34b) includes a circular recess (lO8b) provided in a surface of said body facing said tool supporting member (lO3), and wherein the diameter of said circular recess (lO8b) is equal to or greater than the maximum linear displacement of said tool supporting member (lO3) relative to said body.

## Patentansprüche

1. Mikrometergerät (100) zum Feinbearbeiten von Bohrungen mit einem im wesentlichen zylindrischen, hohlen Grundkörper, einer drehbaren Mikrometerschraube (105), die sich im wesentlichen längs in dem Grundkörper erstreckt, einem Werkzeugtragelement (103), das durch den Grundkörper getragen und in bezug dazu beweglich ist, einem Werkzeughalter (101, 101a), der durch das Werkzeugtragelement (103) getragen wird, und Antriebsmitteln (120, 123) zum Bewirken einer linearen Bewegung des Werkzeugtragelements (103) bei Drehung der Mikrometerschraube (105), wobei die Antriebsmittel (102, 123) einen im wesentlichen zylindrischen, länglichen Stab (120) zur linearen Bewegung bei einer Drehung der Mikrometerschraube (105) und einen schräg liegenden Abschnitt (123) haben, der sich in einem Winkel (β) zur Längsachse des Stabes (120) erstreckt, wobei der schräg liegende Abschnitt (123) im gleitfähigen Eingriff mit dem Werkzeugtragelement (103) steht, so daß eine Drehung der Mikrometerschraube (105) eine Verschiebung des Werkzeugtragelements (103) in eine Richtung im wesentlichen senkrecht zur Drehachse der Mikrometerschraube bewirkt, **dadurch gekennzeichnet**, daß obere und untere Hülsen (121, 122) mit inneren und äußeren Gewinden im wesentlichen konzentrisch und innerhalb des zylindrischen Stabes (120) angeordnet sind und im Gewindeeingriff damit stehen und daß sich ein Ansatz (105b) der Mikrometerschraube (105) in die oberen und unteren Hülsen (121, 122) hinein erstreckt und damit im Gewindeeingriff steht.

2. Mikrometergerät (100) nach Anspruch 1 mit Spielunterdrückungsmitteln zum Unterdrücken von Spiel zwischen ersten und zweiten, relativ zueinander beweglichen, linear beweglichen Teilen (103, 123) der Antriebsmittel oder diesen zugeordneten Teilen, wobei die Spielunterdrückungsmittel eine Bohrung (103'c), die sich in das erste Teil (103) erstreckt und in eine Oberfläche davon mündet, einen Keil (103'e) in der Bohrung (103'c) und Druckmittel (103'a, 103'b) haben, um den Keil (103'e) aus der Öffnung der Bohrung (103'c) herauszudrücken, damit er an eine Seitenwand des zweiten Teils (123) drückt und dabei jedes mechanische Spiel unterdrückt.

3. Mikrometergerät nach Anspruch 2, wobei das erste Teil ein Querstück (103) ist, das das Werkzeugtragelement bildet, und wobei das zweite Teil ein schräg liegender Abschnitt (123) eines länglichen Stabes (120) der Antriebsmittel ist, wobei der schräg liegende Abschnitt (123) in gleitfähigen Eingriff mit dem Querstück (103) steht.

4. Mikrometergerät nach Anspruch 3, bei dem die Druckmittel (103'a, 103'b) der Spielunterdrückungsmittel eine Schraube (103'a), die ausgelegt ist, um in einer festgelegten Position in der Bohrung (103'c) gehalten zu werden, und Federn (103'b) haben, die zwischen der Schraube (103'a) und dem Keil (103'e) eingefügt sind und den Keil (103'e) aus der Bohrung (103'c) herausdrücken, und wobei bevorzugt der Keil (103'e) einen trapezförmigen Schnitt hat.

5. Mikrometergerät nach einem der vorhergehenden Ansprüche, wobei eine Meßtrommel (104) konzentrisch relativ zur Mikrometerschraube (105) befestigt und damit verbunden ist, so daß eine Drehung der Trommel (104) die Schraube (105) dreht, die Drehung der Trommel (105) und also auch der Schraube (105) eine lineare Verschiebung einer Anordnung in eine Richtung längs der Schraube (105) bewirkt, welche Anordnung aus dem zylindrischen Stab (120) und den oberen und unteren Hülsen (121, 122) besteht, wobei die Auflösung der Mikrometerschraube (105) im wesentlichen gleich der geringstmöglichen Verschiebung der Anordnung ist und bestimmt wird durch das Verhältnis zwischen der Gewindesteigung der Mikrometerschraube (105) und der Anzahl von Teilungen der Meßtrommel (104).

6. Mikrometergerät nach einem der vorhergehenden Ansprüche, wobei das Werkzeugtragelement (103) ein bewegliches Querstück (103) ist, das auf dem Grundkörper getragen wird, um sich im wesentlichen quer zur Längsachse der Mikrometerschraube (105) zu bewegen, und bei dem eine Bewegung des Querstücks (103) relativ zum Grundkörper durch mindestens zwei Reihen beabstandeter Kugeln (131) geführt wird, die entlang jeweils gegenüberliegender Führungsschienen (103a, 133a) des Grundkörpers und Querstücks (103) rollen, wobei sich jede Führungsschiene im wesentlichen quer zur Längsachse der Mikrometerschraube (105) jeweils in einem, dem Querstück (103) oder dem Grundkörper, erstreckt und jede Führungsschiene (103a, 133a) im wesentlichen V-förmig ist.

7. Mikrometergerät nach Anspruch 6, wobei im wesentlichen ebene Führungsschienen (103b, 133b) zusätzlich in dem Querstück (103) und dem Grundkörper vorgesehen sind, die einander gegenüberliegen, und wobei eine weitere Reihe Kugeln (132) zwischen den gegenüberliegenden, ebenen Führungsschienen (103b, 133b) angeordnet sind, um eine Verschiebung des Querstücks (103) zu erleichtern.

8. Mikrometergerät nach Anspruch 7, wobei jedes Paar der zwei Paare gegenüberliegender, im wesentlichen V-förmiger Führungsschienen (103a, 133a) sich im wesentlichen parallel zu und mit einem Abstand von einem jeweiligen Paar der zwei Paare gegenüberliegender, ebener Führungsschienen (103b, 133b) erstrecken, so daß die Reihen Kugeln (131, 132) in den Führungsschienen in einem im wesentlichen trapezförmigen Umfang enthalten sind, dessen Eckpunkte die Mittellinien der Kugeln (131, 132) sind.

9. Mikrometergerät nach einem der vorhergehenden Ansprüche, das ferner einen ersten Kühlkanal (135), der in eine Kühlkammer (108a, 108b, 134b) mündet, und einen zweiten Kühlkanal (103c) aufweist, der sich in das Werkzeugtragelement (103) erstreckt, wobei mindestens ein Teil der Kühlkammer (108a, 108b, 134b) einen kreisförmigen Umfang hat und so angeordnet ist, daß er in Verbindung mit dem zweiten Kühlkanal (103c), unabhängig von der Position des Werkzeugtragelements (103) relativ zum Grundkörper, bleibt.

10. Mikrometergerät nach Anspruch 9, wobei die Kühlkammer (108a, 108b, 134b) eine kreisförmige Ausnehmung (108b) in einer Oberfläche des Grundkörpers, gegenüberliegend vom Werkzeugtragelement (103), hat und wobei der Durchmesser der kreisförmigen Ausnehmung (108b) gleich oder größer ist als die maximale lineare Verschiebung des Werkzeugtragelements (103) relativ zu dem Grundkörper.

## Revendications

1. Dispositif micrométrique (100) pour la finition de forures, comprenant un corps creux essentiellement cylindrique, une vis micrométrique rotative (105) qui s'étend dans ledit corps en direction essentiellement longitudinale, un élément (103) de support d'outil, supporté par ledit corps et mobile par rapport à celui-ci, un porte-outil (101,101a) porté par ledit élément (103) de support d'outil, et des moyens de déplacement (120,123) pour produire un mouvement linéaire dudit élément (103) de support d'outil lors de la rotation de ladite vis micrométrique (105), lesdits moyens de déplacement (120,123) comprenant une tige allongée essentiellement cylindrique (120), agencée de façon à effectuer un mouvement linéaire lors de la rotation de ladite vis micrométrique (105) et comportant une partie oblique (123) qui s'étend en formant un angle (β) avec l'axe longitudinal de ladite tige (120), ladite partie oblique (123) étant adaptée à glissement dans ledit élément (103) de support d'outil, de sorte que la rotation de ladite vis micrométrique (105) produise un déplacement dudit élément (103) de support d'outil dans une direction essentiellement perpendiculaire à l'axe de rotation de ladite vis micrométrique, caractérisé en ce que des douilles supérieure et inférieure (121,122), munies de filetages interne et externe, sont disposées pratiquement de manière coaxiale et à l'intérieur de la tige cylindrique (120), en prise par vissage avec celle-ci, et en ce qu'un prolongement (105b) de ladite vis micrométrique (105) s'étend dans lesdites douilles supérieure et inférieure (121,122), en prise par vissage avec celles-ci.

2. Dispositif micrométrique (100) selon la revendication 1, dans lequel des moyens de suppression de jeu sont prévus pour supprimer le jeu entre des première et seconde parties (103,123), mobiles linéairement et mobiles l'une par rapport à l'autre, desdits moyens de déplacement ou associées à ceux-ci, lesdits moyens de suppression de jeu comprenant une forure (103'c) qui s'étend dans ladite première partie (103) et s'ouvre dans une surface de celle-ci, un coin (103'e) reçu dans ladite forure (103'c) et des moyens de pression (103'a,103'b) agencés de façon à pousser ledit coin (103'e) vers l'extérieur de l'ouverture de ladite forure (103'c) pour qu'il bute contre une paroi latérale de ladite seconde partie (123) et supprime ainsi un éventuel jeu mécanique.

3. Dispositif micrométrique selon la revendication 2, dans lequel ladite première partie est une barre transversale (103) formant ledit élément de support d'outil, et dans lequel ladite seconde partie est une partie oblique (123) d'une tige allongée (120) desdits moyens de déplacement, ladite partie oblique (123) étant adaptée à glissement dans ladite barre transversale (103).

4. Dispositif micrométrique selon la revendication 3, dans lequel les moyens de pression (103'a,103'b) desdits moyens de suppression de jeu comprennent une vis (103'a) agencée de façon à être maintenue dans une position prédéterminée dans ladite forure (103'c) et un moyen à ressort (103'b) interposé entre ladite vis (103'a) et ledit coin (103'e) et agencé de façon à pousser ledit coin (103'e) vers l'extérieur de ladite forure (103'c), et dans lequel ledit coin (103'e) a de préférence une section trapézoïdale.

5. Dispositif micrométrique selon l'une quelconque des revendications 1 à 4, dans lequel un tambour gradué (104) est monté coaxialement par rapport à ladite vis micrométrique (105) et est accouplé à celle-ci de sorte que la rotation dudit tambour (104) fasse tourner ladite vis (105), la rotation dudit tambour (104) et, par suite, de ladite vis (105) produisant un déplacement linéaire, dans la direction longitudinale de ladite vis (105), d'un ensemble comprenant ladite tige cylindrique (120) et lesdites douilles supérieure et inférieure (121,122), la résolution de ladite vis micrométrique (105) étant sensiblement égale au plus petit déplacement possible dudit ensemble et étant déterminée par la relation entre le pas de la vis micrométrique (105) et le nombre de divisions du tambour gradué (104).

6. Dispositif micrométrique selon l'une quelconque des revendications 1 à 5, dans lequel ledit élément (103) de support d'outil est une barre transversale mobile (103) montée sur ledit corps de façon à se déplacer dans une direction essentiellement perpendiculaire à l'axe longitudinal de ladite vis micrométrique (105), et dans lequel le mouvement de ladite barre transversale (103) par rapport audit corps est guidé par au moins deux rangées de billes espacées (131), agencées de façon à rouler le long de guides respectifs (103a,133a) se faisant face sur ledit corps et ladite barre transversale (103), chacun desdits guides s'étendant dans une direction essentiellement perpendiculaire à l'axe longitudinal de ladite vis micrométrique (105), respectivement dans ladite barre transversale (103) et dans le corps, et chacun desdits guides (103a,133a) étant essentiellement en forme de V.

7. Dispositif micrométrique selon la revendication 6, dans lequel des guides essentiellement plans (103b,133b) sont également prévus dans ladite barre transversale (103) et dans ledit corps en face l'un de l'autre, et dans lequel une autre série de billes (132) est disposée entre les guides plans (103b,133b) se faisant face, afin de faciliter le déplacement de ladite barre transversale (103).

8. Dispositif micrométrique selon la revendication 7, dans lequel chaque paire parmi les deux paires de guides en forme de V (103a,133a) se faisant face est disposée de manière à s'étendre dans une direction essentiellement paralléle à une paire respective des deux paires de guides plans (103b,133b) se faisant face et à distance de cette paire, de sorte que les séries de billes (131,132) dans les guides soient contenues dans un périmètre essentiellement trapézoïdal dont les sommets sont les axes médians desdites billes (131,132).

9. Dispositif micrométrique selon l'une quelconque des revendications 1 à 8, comprenant en outre un premier conduit de refroidissement (135) qui s'étend dans ledit corps essentiellement dans la direction longitudinale de celui-ci, une première extrémité dudit premier conduit de refroidissement (135) s'ouvrant dans une chambre de refroidissement (108a,108b,134b), et un second conduit de refroidissement (103c) qui s'étend dans ledit élément (103) de support d'outil, une partie au moins de ladite chambre de refroidissement (108a,108b,134b) ayant une périphérie circulaire et étant agencée de façon à rester en communication avec ledit second conduit de refroidissement (103c) quelle que soit la position dudit élément (103) de support d'outil par rapport audit corps.

10. Dispositif micrométrique selon la revendication 9, dans lequel ladite chambre de refroidissement (108a,108b,134b) comporte une gorge circulaire (108b) formée dans une surface dudit corps faisant face audit élément (103) de support d'outil, et dans lequel le diamètre de ladite gorge circulaire (108b) est égal ou supérieur au déplacement linéaire maximal dudit élément (103) de support d'outil par rapport audit corps.
